# EUROPÄISCHE PATENTSCHRIFT

(11) **EP 3 315 788 B1**
(45) Veröffentlichungstag und Bekanntmachung des Hinweises auf die Patenterteilung: **28.07.2021**
(21) Anmeldenummer: 17195492.8
(22) Anmeldetag: 09.10.2017
(51) Int. Cl.: F04D 29/32, F04D 19/02, F04D 25/08

(54) **AXIALLÜFTERRAD**
AXIAL FAN WHEEL
ROUE DE VENTILATEUR AXIAL

(30) Priorität: 26.10.2016 DE 102016012801
(43) Veröffentlichungstag der Anmeldung: 02.05.2018
(60) Teilanmeldung: 21177046.6
(73) Patentinhaber: MAN Truck & Bus SE, 80995 München (DE)
(72) Erfinder: Neff, Andreas, 81247 München (DE); Gell, Christian, 85302 Gerolsbach (DE)
(74) Vertreter: v. Bezold & Partner Patentanwälte - PartG mbB

(56) Entgegenhaltungen:
- EP-A2- 0 921 318
- EP-A2- 1 892 421
- WO-A2-2008/146154
- DE-A1- 1 503 617
- DE-A1- 1 902 598
- FR-A1- 2 815 676
- US-A1- 2016 146 210

## Beschreibung

Die vorliegende Erfindung betrifft ein Axiallüfterrad. Insbesondere sind ein Axiallüfterrad für den Kühler eines Kraftfahrzeugmotors und ein damit ausgestattetes Nutzfahrzeug beschrieben.

Um dem Kühler eines Kühlkreislaufs Umgebungsluft zuzuführen, ist beispielsweise in Strömungsrichtung hinter dem Kühler ein Axiallüfterrad zur Erzeugung eines Unterdrucks am Kühler angeordnet. Abhängig von Umgebungslufttemperatur und Kühlleistung muss eine Lüfternabe des Axiallüfterrads eine erhebliche mechanische Leistung an die Laufschaufeln des Axiallüfterrads übertragen, die im Nutzfahrzeugbereich über 10 kW betragen kann. Dabei treten in der Lüfternabe entsprechend große Zentrifugalkräfte und, zur Leistungsübertragung und bei Drehzahländerungen, große Scherkräfte auf.

Das Dokument DE 1 503 617 A1 beschreibt einen Schraubenflächenventilator, dessen Nabe Durchlässe umfasst, die als Kanäle ausgebildet sind. Die Schwerpunkte der Eintrittsquerschnitte und der Austrittsquerschnitte der Kanäle sind von der Drehachse unterschiedlich weit entfernt, so dass eine Fliehkraftwirkung eine Druckerhöhung, insbesondere beim Windradbetrieb, bewirkt.

Das Dokument EP 1 892 421 A2 beschreibt einen Axiallüfter, dessen Verbindung mit einem elektrischen Antriebsmotor torsionsweich ausgebildet ist, um akustische Emissionen bzw. Schallabstrahlung zu reduzieren. Eine topfförmige Nabe weist dazu auf ihrer Stirnfläche Öffnungen auf, welche mit einer Folie abgedeckt werden. Sich auf der Innenseite der Nabe in radialer und axialer Richtung erstreckende Rippen sollen eine hinreichende Biegesteifigkeit der Nabe gewährleisten.

Das Dokument FR 2 815 676 A1 beschreibt einen Schraubenventilator für ein Kraftfahrzeug, dessen Nabe im wesentlichen S-förmige Kanäle umfasst, deren jeweils erster (in Fahrtrichtung des Kraftfahrzeugs) Teil konvergiert und deren jeweils zweiter (der Fahrtrichtung abgewandter) Teil divergiert. Die Luftführung entlang eines S-förmigen Kanals verläuft entgegen der Rotationsrichtung des Ventilators. Der erste und zweite Teil eines Kanals haben jeweils in der Aufsicht die Form einer Flosse.

Ein weiterer Axiallüfter ist aus dem Dokument EP 0 921 318 A2 bekannt.

Das Dokument EP 1 519 052 B1 beschreibt ein Axiallüfterrad, dessen Nabenstirnfläche eine Mechanik mit verschiebbaren Blendenscheiben umfasst. Bei Drehung des Axiallüfterrads verschließen die Blendenscheiben die Nabenstirnfläche. Bei abgeschaltetem Lüfter wird die Nabenstirnfläche durch eine Vorspannung partiell geöffnet.

Jedoch steht eine in die rotierende Lüfternabe integrierte Mechanik mit beweglichen Teilen, insbesondere mit in Drehrichtung gegenüber der Lüfternabe verschiebbaren Blendenscheiben, einem leistungseffizienten Betrieb des Axiallüfterrads entgegen. Durch die zusätzliche rotierende Masse der Mechanik wird die Leistungsaufnahme des Axiallüfterrads, und damit beispielsweise der Kraftstoffverbrauch, erhöht. Ferner ist eine in die Lüfternabe integrierte Mechanik den genannten Kräften ausgesetzt und kann im Luftstrom durch Verschmutzung blockieren.

Das Dokument WO 2008/146154 A2 beschriebt ein Axiallüfterrad mit einem Hauptlüfter, der eine axiale Druckdifferenz erzeugt. Das Axiallüfterrad umfasst ferner einen zusätzlichen Lüfter, der durch die radial nach außen gerichteten Öffnungen einen der axialen Druckdifferenz entgegengesetzten Druckgradienten erzeugt.

Zwar ist es zur Reduzierung der rotierenden Masse grundsätzlich möglich, die Lüfternabe mit permanenten Öffnungen zu versehen. Jedoch wird durch die Öffnungen der kühlerseitig aufgebaute Unterdruck gemindert. Somit ist es eine Aufgabe der vorliegenden Erfindung, ein energieeffizienteres Axiallüfterrad anzugeben, das den Belastungsanforderungen beispielsweise im Nutzfahrzeugbereich genügt.

Diese Aufgabe wird durch ein Axiallüfterrad gemäß dem unabhängigen Patentanspruch 1 gelöst. Vorteilhafte Ausführungen und Anwendungen sind Gegenstand der abhängigen Patentansprüche und werden im Folgenden unter teilweise Bezugnahme auf die Figuren näher erläutert.

Erfindungsgemäß ist ein Axiallüfterrad, insbesondere für den Kühler eines Kraftfahrzeugmotors, bereitgestellt. Das Axiallüfterrad umfasst einen Kranzring mit einer Vielzahl an Laufschaufeln; und eine Nabe mit einem mit einer Antriebswelle verbundenen oder verbindbaren Innenring und zur Drehmomentübertragung mit dem Innenring und dem Kranzring verbundenen Anschlussflächen entlang eines Außenumfangs der Nabe. Die Nabe weist zwischen dem Innenring und dem Außenumfang Durchgangsausnehmungen auf. Mindestens ein innerhalb des Kranzrings drehfest am Axiallüfterrad angeordnetes Element ist dazu ausgebildet, bei rotierendem Axiallüfterrad eine Druckdifferenz in axialer Richtung aufrecht zu erhalten.

Die Laufschaufeln können sich vom Kranzring radial außerhalb des Kranzrings erstrecken. Die Laufschaufeln können einen Luftstrom antreiben. Durch das mindestens eine Element kann eine Rezirkulation (auch: Rückströmung) des Luftstroms im Umfang der Nabe (beispielsweise innerhalb des Außenumfangs) verhindert werden.

Indem am Axiallüfterrad das mindestens eine Element drehfest, insbesondere ohne Relativbewegung zur Nabe, angeordnet ist, können Ausführungsbeispiele des Axiallüfterrads den Belastungs- und Leistungsanforderungen im Nutzfahrzeugbereich genügen. Alternativ oder ergänzend kann aufgrund der Durchgangsausnehmungen die rotierende Masse der Nabe zur Verringerung der notwendigen Antriebsleistung, insbesondere bei wechselnden Drehzahlen, reduziert werden.

Das mindestens eine Element kann einen Druckausgleich oder eine Druckabschwächung der Luft über die Durchgangsausnehmungen verhindern. Dabei kann das mindestens eine Element ohne oder ohne wesentlichen Beitrag zur rotierenden Masse der Nabe ausgeführt sein, beispielsweise da das mindestens eine Element nicht an der Drehmomentübertragung (vom Innenring über die Anschlussflächen auf den Kranzring) beteiligt ist.

Die Anschlussflächen entlang des Außenumfangs können durch einen Außenring und/oder Ringsegmente entlang des Außenumfangs realisiert sein. Der Außenring kann umlaufend geschlossen sein. Die Ringsegmente können voneinander beabstandet sein. Die Anschlussflächen können in einer Drehebene des Axiallüfterrads bzw. der Nabe liegen.

Der Außenumfang, beispielsweise der Außenring und/oder die Ringsegmente, können radial innerhalb des Kranzrings angeordnet sein. Der Innenring kann radial innerhalb des Außenumfangs angeordnet sein. Die Drehmomentübertragung zwischen dem Innenring und dem Kranzring kann ausschließlich über die Anschlussflächen erfolgen.

Die Nabe kann in Leichtbauweise ausgeführt sein, insbesondere zwischen Innenring und Außenumfang (beispielsweise dem Außenring). Alternativ oder ergänzend kann der Innenring außerhalb einer Drehebene der Anschlussflächen (beispielsweise außerhalb einer Drehebene des Außenrings) liegen. Beispielsweise kann die Nabe zumindest am Innenring als Verbindungsstelle zur Antriebswelle hin ausbauchen oder gewölbt sein.

Herkömmliche Lüfternaben für den Lüfterantrieb sind so ausgeführt, dass die Lüfternabe selbst die Unterdruckseite (auch: Lüftersaugseite) von der Überdruckseite (z. B. dem Motorraum) trennt, wodurch aufgrund einer zur Drehmomentübertragung ausgebildeten Wanddicke der Lüfternabe deren Trägheitsmoment höher als bei Ausführungsbeispielen ist. Würde das Trägheitsmoment der Lüfternabe durch Öffnungen reduziert, würde sich die Kühlleistung bei gleicher Drehzahl verschlechtern, und es müsste zum Aufbau derselben Druckdifferenz die Drehzahl erhöht werden. Dagegen können Ausführungsbeispiele mit dem am Axiallüfterrad drehfest befestigten Element die Luftrezirkulation verhindern, ohne das Trägheitsmoment des Axiallüfterrads oder dessen Nabe signifikant zu erhöhen. So kann bei gleicher Drehzahl mit geringerer Leistungsaufnahme dieselbe Druckdifferenz erzeugt werden.

Das mindestens eine Element kann ein zusätzliches Abdeckblech und/oder eine Luftleiteinrichtung, welche der Rezirkulation entgegenwirkt, umfassen. Erfindungsgemäß umfasst das mindestens eine Element eine Luftleiteinrichtung, die weitere Laufschaufeln innerhalb des Umfangs des Kranzrings umfasst. Die Luftleiteinrichtung kann mit der Nabe einstückig-integral sein (beispielsweise durch Formgebung der Nabe ohne zusätzliche Masse) oder als zusätzliches Blech angeschraubt sein. Der Leichtbau der Nabe mit den Durchgangsausnehmungen ermöglicht beispielsweise eine Kraftstoffreduzierung ohne Rezirkulation der Kühlluft.

Die Druckdifferenz in axialer Richtung kann durch die rotierenden Laufschaufeln aufgebaut werden, beispielsweise radial außerhalb des Kranzrings. Die Druckdifferenz in axialer Richtung wird durch das mindestens eine Element radial innerhalb des Kranzrings aufrechterhalten.

Der Innenring kann über eine Presspassung mit der Antriebswelle verbunden oder verbindbar sein. Das Axiallüfterrad kann hydrostatisch, elektrisch oder mechanisch (z. B. über einen Riemen) angetrieben sein.

Ein in die Drehebene (d. h. axial) projizierter Flächenanteil der Nabe zwischen Innenring und Außenumfang (beispielsweise Außenring) ist erfindungsgemäß kleiner als ein in die Drehebene (d. h. axial) projizierter Flächenanteil der Durchgangsausnehmungen zwischen Innenring und Außenumfang (beispielsweise Außenring). Ergänzend kann eine radiale Weite der Durchgangsausnehmungen größer sein als ein Durchmesser (z. B. ein Innendurchmesser oder Inkreisdurchmesser) des Innenrings.

Das mindestens eine Element kann das Innere des Kranzrings und/oder die Durchgangsausnehmungen zwischen Innenring und Außenumfang (beispielsweise Außenring) überdecken und/oder (zumindest teilweise) verschließen. Das überdeckende oder verschließende Element wird auch als Abdeckung bezeichnet.

Das mindestens eine Element umfasst weitere Laufschaufeln. An dem mindestens einen Element (beispielsweise der Abdeckung) sind weitere Laufschaufeln angeformt.

Das mindestens eine Element umfasst Speichen zur Drehmomentübertragung zwischen Innenring und Außenumfang (beispielsweise Außenring). Die Speichen können als weitere Laufschaufeln ausgebildet sein. Die Nabe weist zwischen den Speichen die Durchgangsausnehmungen auf.

Die weiteren Laufschaufeln, die beispielsweise durch Speichen ausgebildet sind und/oder an der Abdeckung angeformt sind, können gegenüber einer Drehebene des Axiallüfterrads angestellt sein und/oder in Umlaufrichtung (oder Drehrichtung) gekrümmt sein. Die weiteren Laufschaufeln können einen Anstellwinkel mit der Drehebene einschließen oder eine Steigung aufweisen. Der Anstellwinkel kann (beispielsweise am Außenumfang oder am Umfang des Außenrings) mindestens 5° bis 15° betragen.

Das mindestens eine Element kann an der Nabe starr angeordnet sein. Das mindestens eine Element kann im Betrieb des Axiallüfterrads bezüglich der Nabe unbeweglich (insbesondere drehfest und schwenkfest bezüglich der Nabe) sein. Beispielsweise kann eine Lage des mindestens einen Elements in Bezug zur Nabe drehzahlunabhängig sein.

Das mindestens eine Element kann aus einem Leichtmetall (z. B. Aluminium) oder einem Faserverbundwerkstoff (z. B. mit Glas- oder Kohlenstoff-Fasern) gefertigt sein. Das mindestens eine Element, beispielsweise die Abdeckung, kann dünnwandig sein. Beispielsweise kann eine axiale Wanddicke der Abdeckung kleiner sein als eine axiale Wanddicke der Nabe. Das mindestens eine Element, beispielsweise die Abdeckung, kann aus Aluminiumblech gefertigt sein.

Das mindestens eine Element, beispielsweise die Abdeckung, kann ohne Beitrag zur Drehmomentübertragung (insbesondere ohne einen Beitrag zur Übertragung von Antriebsmoment von der Antriebswelle) an den Kranzring sein.

Ein Durchmesser des mindestens einen Elements kann größer sein als ein Außendurchmesser des Außenumfangs (beispielsweise des Außenrings). Der Durchmesser des mindestens einen Elements ist erfindungsgemäß gleich oder kleiner als ein Innendurchmesser des Kranzrings.

Das mindestens eine Element kann in axialer Richtung versetzt zur Nabe angeordnet sein. Alternativ oder ergänzend kann der Innenring außerhalb einer durch die Anschlussflächen oder den Außenring definierten Drehebene angeordnet sein. Beispielsweise kann die Abdeckung auf einer stromaufwärtigen Seite der durch die Anschlussflächen oder den Außenring definierten Drehebene angeordnet sein. Der Innenring kann auf einer stromabwärtigen Seite der durch die Anschlussflächen oder den Außenring definierten Drehebene angeordnet sein. Gemäß einem weiteren Aspekt ist ein Kraftfahrzeug, insbesondere ein Nutzfahrzeug, bereitgestellt. Das Kraftfahrzeug umfasst eine Lüfteranordnung mit einem Axiallüfterrad gemäß einer Ausführung des vorgenannten Aspekts. Die Lüfteranordnung kann einen Kühler zur Kühlung eines Aggregates des Antriebsstrangs, beispielsweise einer Brennkraftmaschine und/oder eines elektrischen Traktionsenergiespeichers, umfassen.

Weitere Merkmale und Vorteile der Erfindung werden im Folgenden unter Bezugnahme auf die beigefügten Zeichnungen beschrieben. Es zeigen:
- Figur 1: eine schematische Ansicht eines ersten, nicht erfindungsgemäßen Ausführungsbeispiels einer Nabe für ein Axiallüfterrad;
- Figur 2: eine schematische Ansicht eines zweiten, nicht erfindungsgemäßen Ausführungsbeispiels einer Nabe für ein Axiallüfterrad;
- Figur 3: eine perspektivische Darstellung einer Lüfteranordnung mit einem ersten, nicht erfindungsgemäßen Ausführungsbeispiel eines Axiallüfterrads;
- Figur 4: eine perspektivische Darstellung einer Lüfteranordnung mit einem zweiten, nicht erfindungsgemäßen Ausführungsbeispiel eines Axiallüfterrads,
- Figuren: 5A und 5B eine perspektivische Darstellung einer Lüfteranordnung mit einem erfindungsgemäßen Ausführungsbeispiel eines Axiallüfterrads; und
- Figur 6: eine schematische Schnittdarstellung eines nicht erfindungsgemäßen Ausführungsbeispiels der Lüfteranordnung mit Axiallüfterrad und Kühlerwanne.

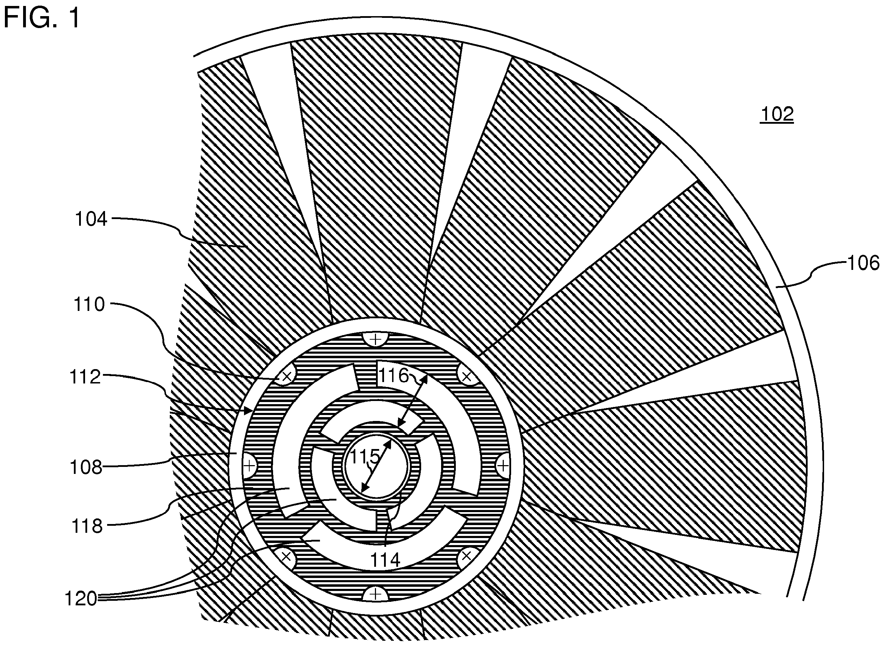

Figur 1 zeigt ein erstes, nicht erfindungsgemäßes Ausführungsbeispiel einer Nabe 112 für ein mit Bezugszeichen 102 bezeichnetes Axiallüfterrad. Das Axiallüfterrad umfasst eine Vielzahl an Laufschaufeln 104, die radial außenseitig in einen Mantelring 106 und radial innenseitig in einen Kranzring 108 eingefasst sind. Am Kranzring 108 können radial innenseitig Kranzstege 110 auskragen, mit Befestigungsstellen zur verdrehfesten Verbindung (beispielsweise Verschraubung) mit der Nabe 112.

Die Nabe 112 umfasst einen mit einer Antriebswelle verbindbaren Innenring 114 und Anschlussflächen an einem Außenumfang 118 der Nabe 112, beispielsweise einen Außenring oder Segmente eines solchen Rings. Über die Anschlussflächen, beispielsweise über den Außenring, ist die Nabe 112 mit dem Kranzring 108 verbunden.

Zur Klarheit der Beschreibung wird in der folgenden Beschreibung davon ausgegangen, dass die Anschlussflächen entlang des Außenumfangs durch einen Außenring 118 gebildet sind. Wo im Folgenden auf den Außenring 118 abgestellt wird, kann dieser dahingehend modifiziert sein, dass nur Segmente des beschriebenen Außenrings 118 vorhanden sind und die Anschlussflächen bilden.

Über einen Bereich 116 zwischen dem Innenring 114 und dem Außenring 118 ist Drehmoment (beispielsweise ein Antriebsmoment und/oder ein Verzögerungsmoment des Axiallüfterrads 102) übertragbar. Der Zwischenbereich 116 umfasst eine Vielzahl an Durchgangsausnehmungen 120.

Der Zwischenbereich 116 ist aufgrund der Durchgangsausnehmungen 120 in Leichtbauweise ausgeführt. Beispielsweise ist die Masse und/oder das Trägheitsmoment des Zwischenbereichs 116 minimiert unter der Nebenbedingung der Übertragung des Drehmoments zwischen Innenring 114 und Außenring 118 der Nabe 112.

Im in Figur 1 gezeigten Ausführungsbeispiel umfasst der Zwischenbereich 116 mindestens einen Ring, der über radiale Stege innenseitig mit dem Innenring 114 und außenseitig mit dem Außenring 118 zur Übertragung des Drehmoments verbunden ist. Die innenseitigen radialen Stege und die außenseitigen radialen Stege sind umlaufend gleichmäßig verteilt, d. h. mit gleichen Winkelabständen. Beispielsweise schließen drei innenseitige radiale Stege jeweils paarweise einen Winkel von 120° ein. Ebenso schließen drei außenseitige radiale Stege paarweise einen Winkel von 120° ein. Dabei sind außenseitige und innenseitige Stege nicht radialfluchtend angeordnet. Beispielsweise schließt bei drei innenseitigen radialen Stegen und drei außenseitigen radialen Stegen jeder innenseitige radiale Steg mit einem außenseitigen radialen Steg einen Winkel von 60° ein. Bei einer doppelt so großen Anzahl an Stegen sind die entsprechenden Winkel halb so groß.

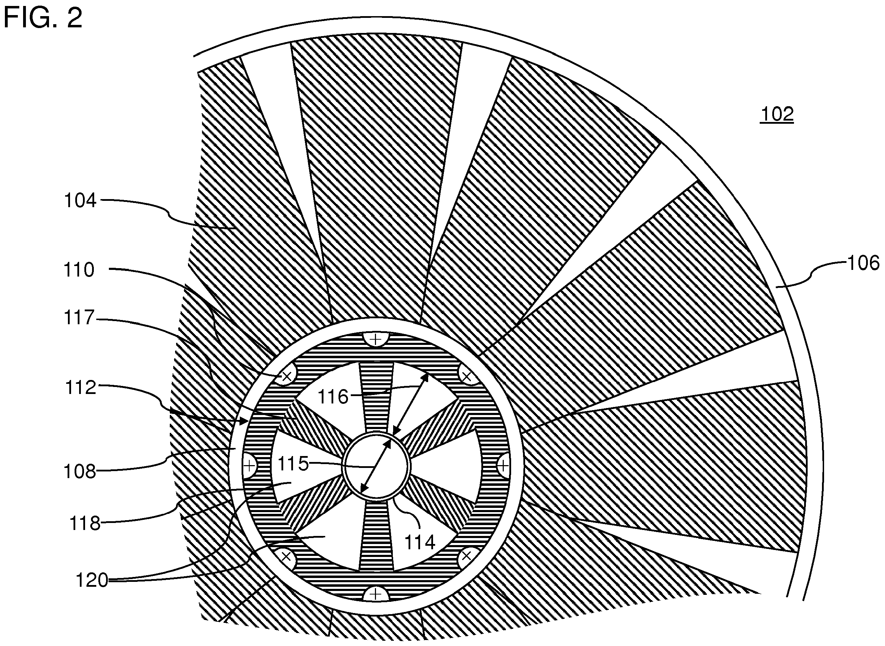

Figur 2 zeigt ein zweites, nicht erfindungsgemäßes Ausführungsbeispiel einer Nabe 112 für ein Axiallüfterrad 102. Gleiche oder funktional entsprechende Merkmale sind mit übereinstimmenden Bezugszeichen in den Figuren bezeichnet.

Das in Figur 2 gezeigte zweite Ausführungsbeispiel der Nabe 112 umfasst im Zwischenbereich 116 eine Vielzahl an Speichen 117, die jeweils radial vom Innenring 114 zum Außenring 118 verlaufen. Zwischen den Speichen 117 sind die Durchgangsausnehmungen 120 der Nabe 112.

In jedem Ausführungsbeispiel der Nabe 112 kann deren Leichtbau durch einen Flächenanteil der Nabe 112 im Zwischenbereich 116 erreicht werden, der kleiner ist als ein Flächenanteil der Durchgangsausnehmungen 120. Erfindungsgemäß ist im Zwischenbereich 116 zwischen Innenring 114 und Außenring 118 der in axialer Richtung auf die Drehebene projizierte Anteil der Nabe 112 (d. h. der geschlossene Flächenanteil des Zwischenbereichs 116) kleiner als der entsprechend projizierte Anteil der Durchgangsausnehmungen 120.

Ergänzend ist eine radiale Weite des Zwischenbereichs 116 (beispielsweise die Länge der Speichen 117) größer als ein Durchmesser 115 des Innenrings 114.

Das Axiallüfterrad 102 umfasst ferner (beispielsweise in Kombination mit jedem vorgenannten Ausführungsbeispiel der Nabe 112) ein innerhalb des Kranzrings 108 drehfest am Axiallüfterrad 102 angeordnetes Element, das dazu ausgebildet ist, bei rotierendem Axiallüfterrad 102 eine Druckdifferenz in axialer Richtung aufrecht zu erhalten. Das mindestens eine Element hält die Druckdifferenz aufrecht, beispielsweise indem die Durchgangsausnehmungen 120 verschlossen oder überdeckt werden. Alternativ oder ergänzend erzeugt das mindestens eine Element aufgrund der Drehung der Nabe 112 lokal eine Druckdifferenz, die der aufrechtzuerhaltenden Druckdifferenz entspricht.

Vorteilhafterweise trägt das mindestens eine Element nicht oder nicht wesentlich zur Masse oder zum Trägheitsmoment der Nabe 112 oder des Axiallüfterrads 102 bei. Beispielsweise umfasst das mindestens eine Element eine dünnwandige Abdeckung, die eine Luftrezirkulation (oder Teilrückströmung) durch die Durchgangsausnehmungen 120 verhindert. Erfindungsgemäß umfasst das mindestens eine Element weitere Laufschaufeln, die an dem mindestens einen Element (beispielsweise an einer Abdeckung der Durchgangsausnehmungen 120) angeformt sind. Zugleich können die weiteren Laufschaufeln Teil der drehmomentübertragenden Struktur im Zwischenbereich 116 sein.

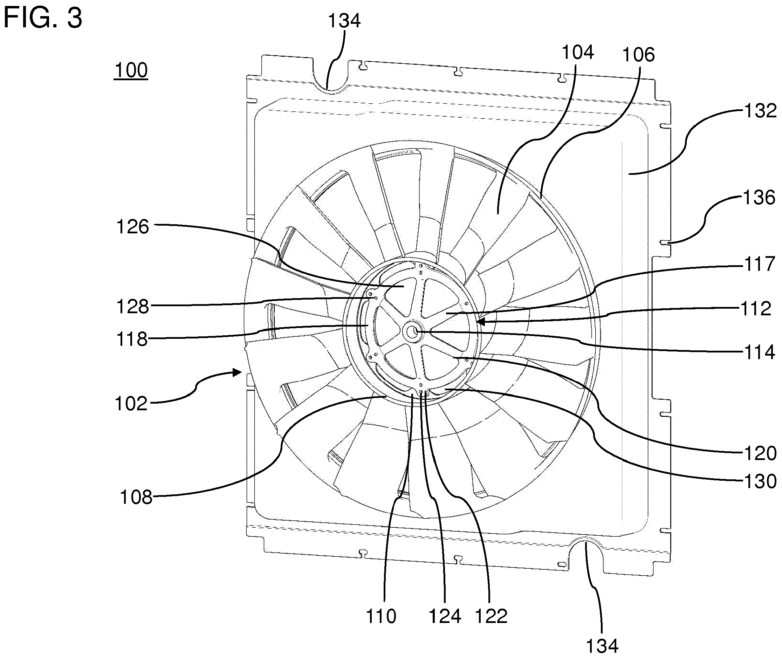

Figur 3 zeigt ein erstes, nicht erfindungsgemäßes Ausführungsbeispiel des Axiallüfterrads 102 im Kontext einer beispielhaften Lüfteranordnung 100. Die Nabe 112 des Axiallüfterrads 102 kann alternative oder ergänzende Merkmale gemäß jedem der mit Bezug auf die Figuren 1 und 2 beschriebenen Beispiele der Nabe 112 umfassen.

Optional umfasst der Außenring 118 der Nabe 112 vom Außenring 118 in radialer Richtung auskragende Nabenstege 122 mit Befestigungsöffnungen 124, durch welche die Nabe 112 mit dem Kranzring 108 (beispielsweise an den Kranzstegen 110) verdrehfest verbunden ist. Am Außenring 118 ist als das die Druckdifferenz aufrechterhaltende Element eine Abdeckung 126 auf der stromaufwärtigen Seite der Nabe 112 angeordnet (d. h. auf der Rückseite der Ansicht in Figur 3). Die Abdeckung 126 umfasst eine Kreisscheibenfläche oder eine Kegelfläche, deren Spitze in Verlängerung der Achse der Nabe 112 liegt. Ein Außendurchmesser der Abdeckung 126 entspricht im Wesentlichen einem Innendurchmesser des Kranzrings 108, so dass das Innere des Kranzrings 108 durch die Abdeckung 126 gegen Luftrezirkulation verschlossen ist.

Die Abdeckung 126 ist an einer Vielzahl von Befestigungsöffnungen 128 im Außenring 118 umlaufend befestigt. Da die tragende Struktur der Nabe 112, insbesondere zur Übertragung des Drehmoments, durch Innenring 114, Zwischenbereich 116 (beispielsweise die in Figur 3 gezeigten Speichen 117) und Außenring 118 gebildet ist, ist die Abdeckung 126 keiner Kraftübertragung oder Drehmomentübertragung auf die Laufschaufeln 104 des Axiallüfterrads 102 ausgesetzt. Dementsprechend kann die Abdeckung 126 dünnwandig sein, ohne wesentlichen Beitrag zur Masse und zum Trägheitsmoment der Nabe 112 oder des Axiallüfterrads 102. Vorzugsweise ist die Abdeckung 126 aus Aluminiumblech gefertigt. Beispielsweise kann die Abdeckung 126 auch eine Öffnung 130 zwischen Außenring 118 und Kranzring 108 verschließen, die aufgrund der vom Außenring 118 radial nach außen auskragenden Nabenstege 122 entsteht.

Die in Figur 3 gezeigte beispielhafte Lüfteranordnung 100 umfasst das Axiallüfterrad 102 und einen Kühler, der stromaufwärts auf der Unterdruckseite des Axiallüfterrads 102 angeordnet ist. Zur besseren Übersichtlichkeit ist in Figur 3 nur eine Kühlerwanne 132 des Kühlers gezeigt. Die Kühlerwanne 132 umfasst mindestens zwei Aussparungen 134 für einen in axialer Richtung geführten Kühlwasserkreislauf und Langlöcher 136 zur Montage der Kühlerwanne 132, beispielsweise in einem Kraftfahrzeug.

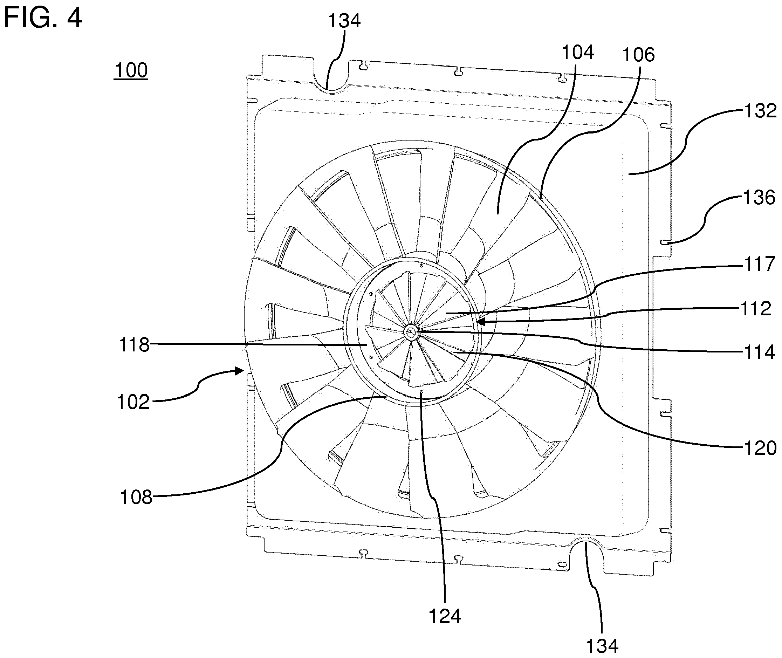

Figur 4 zeigt ein zweites, nicht erfindungsgemäßes Ausführungsbeispiel des Axiallüfterrads 102 im Kontext einer beispielhaften Lüfteranordnung 100. Merkmale, die mit jenen der Figuren 1 bis 3 (strukturell oder funktional) übereinstimmen oder austauschbar sind, sind mit gleichen Bezugszeichen versehen.

Beim in Figur 4 gezeigten zweiten Ausführungsbeispiel des Axiallüfterrads 102 sind die Speichen 117 zwischen Innenring 114 und Außenring 118 als weitere Laufschaufeln ausgebildet. Diese weiteren Laufschaufeln sind ein Beispiel für das die Druckdifferenz aufrechterhaltende Element.

Beispielsweise umfassen die Speichen 117 Abschnitte einer Dreiecksfläche, die um einen Anstellwinkel gegenüber der Drehebene geneigt ist. Alternativ umfassen die Speichen 117 eine gekrümmte Fläche, beispielsweise ein Abschnitt eines hyperbolischen Paraboloids, wobei die zwei Kanten jeder Speiche 117 nicht parallel zur Drehebene des Axiallüfterrads 102 sind. Die beiden Kanten jeder Speiche 117 sind beim in Figur 4 gezeigten zweiten Ausführungsbeispiel windschiefe Geraden.

Beim zweiten Ausführungsbeispiel des Axiallüfterrads 102 kann die Abdeckung 126 entfallen. Vorzugsweise sind die Befestigungsöffnungen 124 direkt im Außenring 118 der Nabe 112 eingebracht (beispielsweise ohne auskragende Nabenstege 122), so dass der Außenring 118 am Kranzring 108 anliegt (beispielsweise ohne eine Öffnung 130 zwischen Außenring 118 und Kranzring 108).

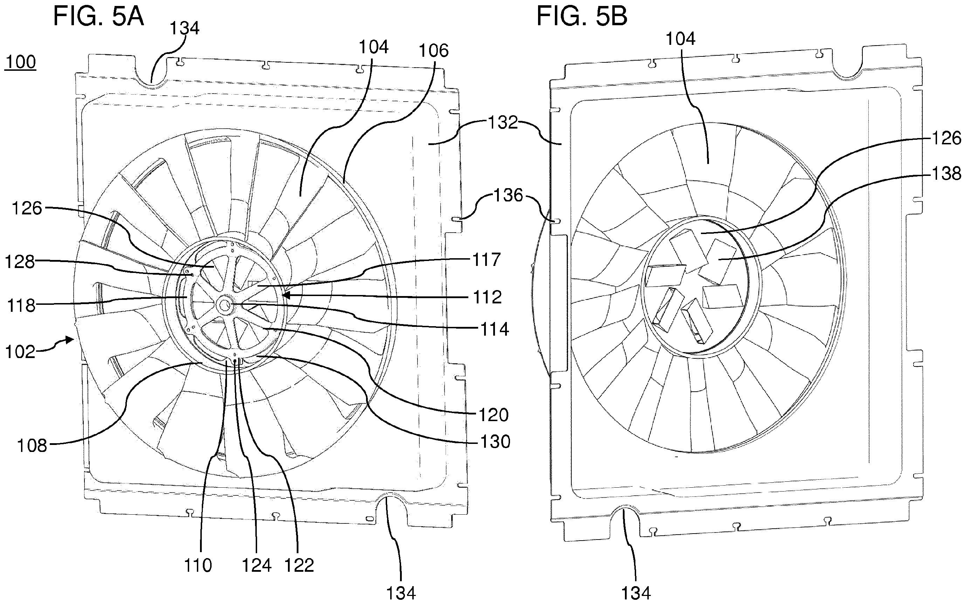

Die Figuren 5A und 5B zeigen schematisch eine Vorderansicht bzw. eine Rückansicht eines erfindungsgemäßen Ausführungsbeispiels des Axiallüfterrad 102 in Kontext einer beispielhaften Lüfteranordnung 100.

Dieses erfindungsgemässe Ausführungsbeispiel kann als eine Variante des ersten Ausführungsbeispiels beschrieben werden. Übereinstimmende oder funktional entsprechende Merkmale sind mit gleichen Bezugszeichen wie beim ersten Ausführungsbeispiel der Figur 3 versehen.

Die Abdeckung 126 umfasst eine ebene und zur Drehebene parallele Grundfläche. Aus der Grundfläche ragen weitere Laufschaufeln 138 in axialer Richtung auf der stromaufwärtigen Seite (d. h. auf der Unterdruckseite) hervor. Jede der weiteren Laufschaufeln 138 umfasst eine in Drehrichtung offene Eingangsseite, die durch eine von der jeweiligen Laufschaufel 138 überdeckte Öffnung in der Grundfläche mit der stromabwärtigen Seite der Nabe 112 (d. h. der Überdruckseite des Axiallüfterrads 102) in Fluidverbindung steht.

Durch die Weiterbildung des ersten Ausführungsbeispiels gemäß diesem erfindungsgemäßen Ausführungsbeispiel kann nicht nur die Luftrezirkulation durch die Durchgangsausnehmungen 120 verhindert werden, sondern ein zusätzlicher Beitrag zum Lufttransport durch die Nabe 112 kann den Hauptlufttransport durch die Laufschaufeln 104 ergänzen. Ferner sind insbesondere das zweite und dieses erfindungsgemäße Ausführungsbeispiel kombinierbar. Beispielsweise ist die mit weiteren Laufschaufeln 138 versehene Abdeckung 126 auf der stromaufwärtigen Seite mit der Nabe 112 verschraubbar, deren Speichen 117 als weitere Laufschaufeln ausgebildet sind.

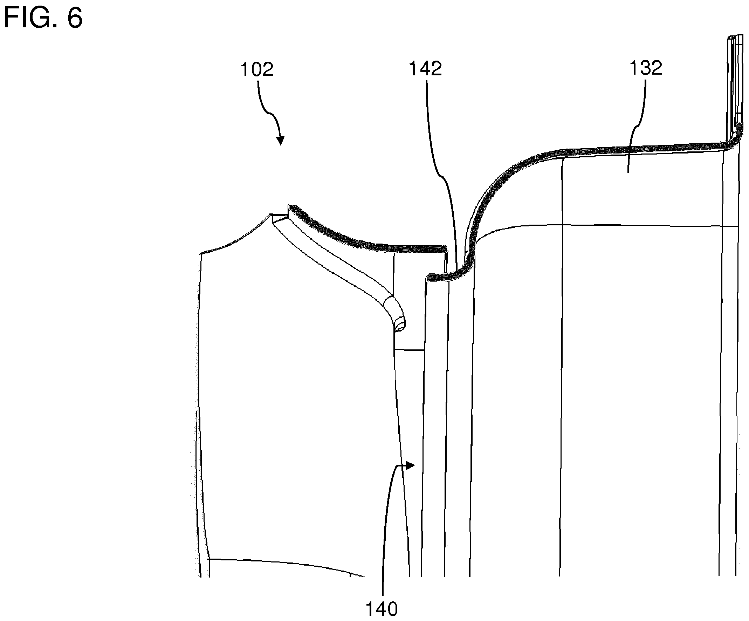

Figur 6 zeigt eine mit jedem vorstehend beschriebenen Ausführungsbeispiel kombinierbare Ausgestaltung der Kühlerwanne 132 und des Mantelrings 106. An einer lüfterseitigen Öffnung 140 der Kühlerwanne 132 ist ein die Öffnung 140 umlaufender Kragen 142 ausgebildet. Ein Kreisdurchmesser des Kragens 142 ist kleiner, beispielsweise um weniger als 5% kleiner, als ein Kreisdurchmesser des kühlerseitigen Mantelrings 106. Der Mantelring 106 und der Kragen 142 sind in axialer Richtung (d. h. in horizontaler Richtung in Figur 6) überlappend angeordnet, so dass zwischen dem rotierenden Mantelring 106 und dem stationären Kragen 142 ein schmaler Luftspalt die Luftrezirkulation am Randbereich der Lüfteranordnung 100 verhindert.

Obwohl die Erfindung unter Bezugnahme auf bestimmte Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Lüfteranordnung
- 102: Axiallüfterrad
- 104: Laufschaufeln
- 106: Mantelring
- 108: Kranzring
- 110: Kranzsteg
- 112: Nabe
- 114: Innenring der Nabe
- 115: Durchmesser des Innenrings
- 116: Zwischenbereich der Nabe
- 117: Nabenspeichen
- 118: Außenumfang oder Außenring der Nabe
- 120: Durchgangsausnehmung in Nabe
- 122: Nabensteg
- 124: Befestigungsöffnung in Nabe für Kranzring
- 126: Abdeckung
- 128: Befestigungsöffnung im Außenring für Abdeckung
- 130: Öffnungen zwischen Außenring und Kranzring
- 132: Kühlerwanne
- 134: Aussparungen für Kühlwasserkreislauf
- 136: Langloch
- 138: Laufschaufeln in Abdeckung
- 140: Lüfterseitige Öffnung der Kühlerwanne
- 142: Kragen der Kühlerwanne

## Patentansprüche

1. Axiallüfterrad (102), insbesondere für den Kühler eines Kraftfahrzeugmotors, umfassend:
einen Kranzring (108) mit einer Vielzahl an Laufschaufeln (104); und
eine Nabe (112) mit einem mit einer Antriebswelle verbundenen oder verbindbaren Innenring (114) und zur Drehmomentübertragung mit dem Innenring (114) und dem Kranzring (108) verbundenen Anschlussflächen entlang eines Außenumfangs (118) der Nabe (112), wobei die Nabe (112) zwischen dem Innenring (114) und dem Außenumfang (118) Durchgangsausnehmungen (120) aufweist, und
wobei mindestens ein innerhalb des Kranzrings (108) drehfest am Axiallüfterrad angeordnetes Element (117; 126; 138) dazu ausgebildet ist, bei rotierendem Axiallüfterrad (102) eine Druckdifferenz in axialer Richtung aufrechtzuerhalten,
wobei das mindestens eine Element Speichen (117) zur Drehmomentübertragung zwischen dem Innenring (114) und dem Außenumfang (118) umfasst, wobei die Nabe (112) zwischen den Speichen (117) die Durchgangsausnehmungen (120) aufweist, und
wobei ein in die Drehebene projizierter Flächenanteil der Nabe (112) zwischen dem Innenring (114) und dem Außenumfang (118) kleiner ist als ein in die Drehebene projizierter Flächenanteil der Durchgangsausnehmungen (120) zwischen dem Innenring (114) und dem Außenumfang (118), **dadurch gekennzeichnet,**
**dass** an dem mindestens einen Element (126) weitere Laufschaufeln (138) angeformt sind, und dass ein Durchmesser des mindestens einen Elements (126) gleich oder kleiner als ein Innendurchmesser des Kranzrings (108) ist.

2. Axiallüfterrad nach Anspruch 1, wobei eine radiale Weite der Durchgangsausnehmungen (120) größer ist als ein Durchmesser (115) des Innenrings (114).

3. Axiallüfterrad nach einem der Ansprüche 1 bis 2, wobei das mindestens eine Element (126) die Durchgangsausnehmungen (120) zwischen dem Innenring (114) und dem Außenumfang (118) und/oder das Innere des Kranzrings (108) verschließt.

4. Axiallüfterrad nach einem der Ansprüche 1 bis 3, wobei die Speichen (117) als weitere Laufschaufeln ausgebildet sind.

5. Axiallüfterrad nach einem der Ansprüche 1 bis 4, wobei das mindestens eine Element (117; 126; 138) an der Nabe (112) starr angeordnet ist.

6. Axiallüfterrad nach einem der Ansprüche 1 bis 5, wobei das mindestens eine Element (126; 138) aus Aluminiumblech gefertigt ist.

7. Axiallüfterrad nach einem der Ansprüche 1 bis 6, wobei das mindestens eine Element (126; 138) kein Drehmoment an den Kranzring überträgt.

8. Axiallüfterrad nach einem der Ansprüche 1 bis 7, wobei ein Durchmesser des mindestens einen Elements (126) größer ist als ein Außendurchmesser des Außenumfangs (118).

9. Axiallüfterrad nach einem der Ansprüche 1 bis 8, wobei das mindestens eine Element (126; 138) in axialer Richtung versetzt zur Nabe (112) angeordnet ist.

10. Axiallüfterrad nach einem der Ansprüche 1 bis 9, wobei der Innenring (114) außerhalb einer durch die Anschlussflächen definierten Drehebene angeordnet ist.

11. Kraftfahrzeug, insbesondere Nutzfahrzeug, das einen Kühler mit einem Axiallüfterrad nach einem der Ansprüche 1 bis 10 umfasst.

## Claims

1. An axial fan wheel (102), in particular for the radiator of a motor vehicle engine, comprising:
a crown ring (108) having a multiplicity of rotor blades (104); and
a hub (112) having an inner ring (114) which is connected or connectable to a drive shaft, and having, for the purpose of torque transmission, connection surfaces along an external circumference (118) of the hub (112) which are connected to the inner ring (114) and to the crown ring (108), wherein the hub (112) has through-passages (120) between the inner ring (114) and the external circumference (118);
wherein at least one element (117; 126; 138), arranged in a rotationally fixed manner on the axial fan wheel inside the crown ring (108), is designed to maintain a pressure difference in the axial direction when the axial fan wheel (102) rotates;
wherein the at least one element comprises spokes (117) for the transmission of torque between the inner ring (114) and the external circumference (118);
wherein the hub (112) has the through-passages (120) between the spokes (117); and
wherein a surface portion, projected into the plane of rotation, of the hub (112) between the inner ring (114) and the external circumference (118) is smaller than a surface portion, projected into the plane of rotation,
of the through-passages (120) between the inner ring (114) and the external circumference (118), **characterized in that**
further rotor blades (138) are integrally formed on the at least one element (126); and
**in that** a diameter of the at least one element (126) is equal to or less than an inner diameter of the crown ring (108) .

2. The axial fan wheel according to Claim 1, wherein a radial width of the through-passages (120) is greater than a diameter (115) of the inner ring (114).

3. The axial fan wheel according to one of Claims 1 to 2, wherein the at least one element (126) closes off the through-passages (120) between the inner ring (114) and the external circumference (118), and/or the interior of the crown ring (108).

4. The axial fan wheel according to one of Claims 1 to 3, wherein the spokes (117) are designed as further rotor blades.

5. The axial fan wheel according to one of Claims 1 to 4, wherein the at least one element (117; 126; 138) is arranged rigidly on the hub (112).

6. The axial fan wheel according to one of Claims 1 to 5, wherein the at least one element (126; 138) is manufactured from aluminium sheet.

7. The axial fan wheel according to one of Claims 1 to 6, wherein the at least one element (126; 138) does not transmit any torque to the crown ring.

8. The axial fan wheel according to one of Claims 1 to 7, wherein a diameter of the at least one element (126) is greater than an outer diameter of the external circumference (118).

9. The axial fan wheel according to one of Claims 1 to 8, wherein the at least one element (126; 138) is arranged so as to be offset in the axial direction in relation to the hub (112).

10. The axial fan wheel according to one of Claims 1 to 9, wherein the inner ring (114) is arranged outside a plane of rotation defined by the connection surfaces.

11. A motor vehicle, in particular a utility vehicle, which comprises a radiator having an axial fan wheel according to one of Claims 1 to 10.

## Revendications

1. Roue de ventilateur axial (102), notamment pour le refroidisseur d'un moteur de véhicule automobile, comprenant :
une bague de couronne (108) munie d'une pluralité de pales (104) ; et
un moyeu (112) muni d'une bague intérieure (114), reliée ou pouvant être reliée avec un arbre d'entraînement, et de surfaces de raccordement, reliées pour le transfert d'un couple avec la bague intérieure (114) et la bague de couronne (108), le long d'une périphérie extérieure (118) du moyeu (112), le moyeu (112) présentant des évidements de passage (120) entre la bague intérieure (114) et la périphérie extérieure (118), et
au moins un élément (117 ; 126 ; 138) agencé à l'intérieur de la bague de couronne (108) de manière immobile en rotation sur la roue de ventilateur axial étant configuré de manière à maintenir, lorsque la roue de ventilateur axial (102) tourne, une différence de pression dans la direction axiale,
l'au moins un élément comprenant des rayons (117) pour le transfert d'un couple entre la bague intérieure (114) et la périphérie extérieure (118), le moyeu (112) présentant les évidements de passage (120) entre les rayons (117), et
une proportion de surface, projetée dans le plan de rotation, du moyeu (112) entre la bague intérieure (114) et la périphérie extérieure (118) étant inférieure à une proportion de surface, projetée dans le plan de rotation, des évidements de passage (120) entre la bague intérieure (114) et la périphérie extérieure (118), **caractérisée en ce que**
des pales supplémentaires (138) sont formées sur l'au moins un élément (126), et
un diamètre de l'au moins un élément (126) est inférieur ou égal à un diamètre intérieur de la bague de couronne (108).

2. Roue de ventilateur axial selon la revendication 1, dans laquelle une largeur radiale des évidements de passage (120) est supérieure à un diamètre (115) de la bague intérieure (114).

3. Roue de ventilateur axial selon l'une quelconque des revendications 1 à 2, dans laquelle l'au moins un élément (126) ferme les évidements de passage (120) entre la bague intérieure (114) et la périphérie extérieure (118) et/ou l'intérieur de la bague de couronne (108).

4. Roue de ventilateur axial selon l'une quelconque des revendications 1 à 3, dans laquelle les rayons (117) sont configurés en tant que pales supplémentaires.

5. Roue de ventilateur axial selon l'une quelconque des revendications 1 à 4, dans laquelle l'au moins un élément (117 ; 126 ; 138) est agencé de manière rigide sur le moyeu (112).

6. Roue de ventilateur axial selon l'une quelconque des revendications 1 à 5, dans laquelle l'au moins un élément (126 ; 138) est fabriqué en tôle d'aluminium.

7. Roue de ventilateur axial selon l'une quelconque des revendications 1 à 6, dans laquelle l'au moins un élément (126 ; 138) ne transfère pas de couple à la bague de couronne.

8. Roue de ventilateur axial selon l'une quelconque des revendications 1 à 7, dans laquelle un diamètre de l'au moins un élément (126) est supérieur à un diamètre extérieur de la périphérie extérieure (118).

9. Roue de ventilateur axial selon l'une quelconque des revendications 1 à 8, dans laquelle l'au moins un élément (126 ; 138) est agencé en décalage par rapport au moyeu (112) dans la direction axiale.

10. Roue de ventilateur axial selon l'une quelconque des revendications 1 à 9, dans laquelle la bague intérieure (114) est agencée à l'extérieur d'un plan de rotation défini par les surfaces de raccordement.

11. Véhicule automobile, notamment véhicule utilitaire, qui comprend un refroidisseur muni d'une roue de ventilateur axial selon l'une quelconque des revendications 1 à 10.
